# EUROPÄISCHE PATENTSCHRIFT

(11) **EP 1 457 589 B1**
(45) Veröffentlichungstag und Bekanntmachung des Hinweises auf die Patenterteilung: **26.11.2008**
(21) Anmeldenummer: 03005796.2
(22) Anmeldetag: 14.03.2003
(51) Int. Cl.: D01D 4/04

(54) **Verfahren zur Reinigung von Spinneinrichtungen**
Cleaning process for spinning apparatus
Procédé de nettoyage de dispositifs de filage

(43) Veröffentlichungstag der Anmeldung: 15.09.2004
(73) Patentinhaber: Reifenhäuser GmbH & Co. KG Maschinenfabrik, 53839 Troisdorf (DE)
(72) Erfinder: Sommer, Sebastian, 53844 Troisdorf (DE)
(74) Vertreter: Rohmann, Michael

(56) Entgegenhaltungen:
- DE-A- 4 017 296
- DATABASE WPI Section Ch, Derwent Publications Ltd., London, GB; Class A00, AN 1968-23680Q XP002251368 & JP 44 000892 B (KURASHIKI RAYON CO)
- DATABASE WPI Section Ch, Week 197822 Derwent Publications Ltd., London, GB; Class A32, AN 1978-39282A XP002251369 & JP 53 043751 A (TORAY IND INC), 20. April 1978 (1978-04-20)
- DATABASE WPI Section Ch, Week 199111 Derwent Publications Ltd., London, GB; Class A32, AN 1991-075976 XP002251370 & JP 03 019906 A (TORAY IND INC), 29. Januar 1991 (1991-01-29)

## Beschreibung

Die Erfindung betrifft ein Verfahren zur Reinigung von Spinneinrichtungen mit einer Mehrzahl von Spinnbohrungen für die Ausgabe von schmelzflüssigem Kunststoff. - Mit solchen Spinneinrichtungen werden vor allem Endlosfilamente erzeugt, die zunächst in schmelzflüssigem Zustand aus den Spinnbohrungen bzw. Spinnöffnungen der Spinnplatte einer Spinneinrichtung austreten und dann insbesondere zu Spinnvliesen flächig abgelegt werden. Eine Spinnplatte kann mehrere tausend Spinnbohrungen aufweisen. - Der Begriff Spinneinrichtung bezieht sich im Rahmen der Erfindung auf die verschiedensten Spinnprozesse. Insoweit meint Spinneinrichtung beispielsweise auch einen Melt-Blown-Blaskopf.

Bei den aus der Praxis bekannten Spinneinrichtungen ist vor der Spinnplatte in der Regel ein Filter angeordnet, der Inhomogenitäten in der zugeführten Schmelze auffängt. Nach längerem Betrieb der Spinneinrichtung können Teile dieses Filters verstopft sein und/oder können sich einige Spinnbohrungen bzw. Spinnkapillare durch Verunreinigungen zugesetzt haben. Wenn die Verunreinigungen und/oder Verstopfungen gravierend sind, muss die Spinnplatte ausgebaut und gereinigt werden und ggf. mit einem neuen Filter wieder eingebaut werden. Wenn aber lediglich wenige Spinnbohrungen bzw. Spinnkapillare verschmutzt sind bzw. durch Verunreinigungen des Filters in ihrer Funktionsweise beeinträchtigt sind, ist es wirtschaftlicher, die nicht mehr einwandfrei arbeitenden Spinnbohrungen vorübergehend mit Verschlusselementen bzw. mit Pfropfen zu verschließen. Erst wenn die Verschmutzung zunimmt bzw. wenn eine größere Anzahl von Spinnbohrungen nicht mehr einwandfrei benutzt werden kann, wird die Spinnplatte zwecks Reinigung ausgebaut. Die Reinigung erfolgt in der Regel durch eine Pyrolysebehandlung, bei der bei Unterdruck und/oder inerten Bedingungen der an der Spinnplatte anhaftende Restkunststoff sowie Verunreinigungen vergast werden. Anschließend kann eine Nachreinigung in Ultraschallbädern und/oder mit Hochdruckreinigern erfolgen. Durch die letztgenannten Behandlungsmaßnahmen werden insbesondere verbleibende Aschen entfernt.

Bei dem aus der Praxis bekannten Verfahren werden die verstopften bzw. die in ihrer Funktionsweise beeinträchtigten Spinnbohrungen vorübergehend mit Verschlusselementen in Form von Grafitpfropfen verschlossen. Diese Grafitpfropfen werden durch Brennen eines Grafit/Ton-Gemisches hergestellt. Das Grafit ist in diesen Grafitpfropfen also gleichsam in einer gebrannten keramischen Bindung vorhanden. Die keramische Bindung ist bis zu Temperaturen von über 1000 °C thermisch stabil. Bei einer späteren Reinigung der Spinneinrichtung bzw. der Spinnplatte müssen diese Grafitpfropfen vollständig entfernt werden, damit alle Spinnbohrungen wie im ursprünglichen Zustand der Spinnplatte wieder voll funktionsfähig sind. Die Entfernung der Grafitpfropfen im Rahmen der aus der Praxis bekannten Reinigungsmaßnahmen ist bei üblichen Spinnbohrungen in Form von Rundkapillaren mit beispielsweise 0,4 bis 1 mm Durchmesser verhältnismäßig einfach möglich. Wenn nichtsdestoweniger noch Probleme bei der Reinigung der Spinnbohrungen auftreten, kann im Rahmen dieser bekannten Maßnahmen zusätzlich eine mechanische Reinigung erfolgen, beispielsweise mit einem Draht oder dergleichen. Das hat aber den Nachteil, dass bei Spinnbohrungen mit geringem Durchmesser Beschädigungen der Spinnbohrungen nicht völlig ausgeschlossen werden können. Das gilt aber vor allem für Spinnbohrungen mit speziellen Austrittsquerschnitten, wie Spinnbohrungen für Hohlfasern und dergleichen. Diese Austrittsquerschnitte haben häufig Öffnungen mit Spaltbreiten von kleiner 0,4 mm. Eine mechanische Reinigung, beispielsweise mit einem Draht ist ohne Beschädigungen der Spinnbohrungen schwierig bzw. unmöglich.

Demgegenüber liegt der Erfindung das technische Problem zugrunde, ein Verfahren der eingangs genannten Art anzugeben, mit dem eine sehr effektive Reinigung der Spinneinrichtung bzw. Spinnplatte möglich ist und mit dem außerdem die zwischenzeitlich eingebrachten Pfropfen aus den zugeordneten Spinnbohrungen einfach und funktionssicher entfernt werden können.

Zur Lösung dieses technischen Problems lehrt die Erfindung ein Verfahren zur Reinigung von Spinneinrichtungen mit einer Mehrzahl von Spinnbohrungen für die Ausgabe von schmelzflüssigem Kunststoff,
wobei im Betrieb der Spinneinrichtung einzelne verschmutzte und/oder verstopfte Spinnbohrungen mit Pfropfen verschlossen werden, welche Pfropfen zumindest teilweise aus zumindest einer oxidierbaren Substanz bestehen,
wobei die Spinneinrichtung im Zuge ihrer Reinigung einer Pyrolysebehandlung unter hohen Temperaturen zum Abbau von restlichem Kunststoff unterworfen wird
und wobei die Spinneinrichtung einer oxidativen Benhandlung unterzogen wird, so dass die oxidierbare Substanz oxidiert wird. - Aufgrund der letztgenannten Oxidation der oxidierbaren Substanz, die Bestandteil der Pfropfen ist, wird eine sehr einfache, funktionssichere und vollständige Entfernung der Pfropfen aus den Spinnbohrungen möglich.

Eine erfindungsgemäße Spinneinrichtung umfasst insbesondere eine Spinnplatte, die mit einer Vielzahl von Spinnbohrungen versehen ist. Wie eingangs bereits dargelegt, meint Spinneinrichtung beispielsweise auch Melt-Blown-Blasköpfe oder die Spinnplatten von Kurzspinn- oder anderen Spinnanlagen. - Dass im Betrieb der Spinneinrichtung Spinnbohrungen mit Pfropfen verschlossen werden, meint, dass die Pfropfen in dem Zeitraum vor einer Reinigung bzw. Grundreinigung, d. h. vor dem vorübergehenden Ausbau der Spinnplatte in die Spinnbohrungen eingeführt werden. Erst wenn eine größere Anzahl von Spinnbohrungen nicht mehr einwandfrei funktioniert bzw. verschmutzt und/oder verstopft ist, findet die erfindungsgemäße Reinigung der Spinneinrichtung mit der Pyrolysebehandlung und der oxidativen Behandlung statt.

Pfropfen meint im Rahmen der Erfindung ein Verschlusselement, das in seiner Querschnittsform bzw. in seinen Querschnittsabmessungen den Spinnöffnungen bzw. Spinnbohrungen angepasst ist. Es liegt im Rahmen der Erfindung, dass ein Pfropfen in eine zu verschließende Spinnbohrung eingeschoben wird und zweckmäßigerweise in der Spinnbohrung verkeilt wird.

Es liegt im Rahmen der Erfindung, dass die Pfropfen aus zumindest einer ersten Substanz und aus zumindest einer zweiten Substanz in Form eines oxidierbaren Bindemittels bestehen. Das oxidierbare Bindemittel bildet also gleichsam eine oxidierbare Bindung für die erste Substanz. Nach sehr bevorzugter Ausführungsform, der im Rahmen der Erfindung ganz besondere Bedeutung zukommt, bestehen die Pfropfen aus Grafit und aus einer oxidierbaren Substanz. Es wird dabei nicht verkannt, dass Grafit grundsätzlich ebenfalls oxidierbar ist. Nach dieser bevorzugten Ausführungsform der Erfindung besteht der Pfropfen aber neben Grafit aus einer weiteren oxidierbaren Substanz. Der Begriff oxidierbare Substanz bzw. oxidierbares Bindemittel umfasst im Rahmen der Erfindung nicht Grafit. Vorzugsweise handelt es sich bei der weiteren oxidierbaren Substanz um einen Stoff, der einfacher bzw. unter milderen Bedingungen oxidierbar ist als Grafit. Nach sehr bevorzugter Ausführungsform, der im Rahmen der Erfindung ganz besondere Bedeutung zukommt, besteht die oxidierende Substanz zumindest teilweise aus reinem amorphem Kohlenstoff. Amorpher Kohlenstoff meint dabei insbesondere zumindest eine Substanz aus der Gruppe "Ruß, Holzkohle, Aktivkohle, Koks, Gaskohle, Tierkohle". Grafit unterscheidet sich von amorphem Kohlenstoff bekanntlich dadurch, dass im Grafit ein regelmäßiges Schichtengitter bzw. Grafitgitter vorliegt, während amorpher Kohlenstoff eine solche regelmäßige Struktur nicht zeigt.

Es liegt im Rahmen der Erfindung, dass bei zunehmender Verschmutzung und/oder Verstopfung der Spinnplatte bzw. ihrer Spinnbohrungen die Spinnplatte zur Reinigung ausgebaut wird. Dann erfolgt die Pyrolysebehandlung und die oxidative Behandlung. Nach sehr bevorzugter Ausführungsform der Erfindung wird die Pyrolyse bei Unterdruck und/oder unter Inertbedingungen durchgeführt. Die Pyrolyse dient zur Vergasung von an der Spinneinrichtung bzw. Spinnplatte anhaftendem Restkunststoff und/oder anderen Verunreinigungen bzw. Verschmutzungen. Unterdruck meint insbesondere, dass die Pyrolyse im Vakuum bzw. quasi unter Vakuumbedingungen durchgeführt wird. Für die Pyrolyse kann beispielsweise Heißdampf eingesetzt werden. Es liegt weiterhin im Rahmen der Erfindung, die Pyrolyse unter einem inerten Schutzgas durchzuführen.

Vorzugsweise erfolgt im Anschluss an die Pyrolysebehandlung eine Reinigung der Spinneinrichtung bzw. Spinnplatte in einem Ultraschallbad. Zweckmäßigerweise wird fernerhin nach der Pyrolysebehandlung eine Reinigung der Spinneinrichtung bzw. Spinnplatte mit einem Hochdruckreiniger durchgeführt. Die beiden vorgenannten Reinigungsmaßnahmen dienen insbesondere zur Entfernung von nach der Pyrolyse verbleibenden Aschen. Bevorzugt wird nach der Pyrolysebehandlung zunächst eine Reinigung im Ultraschallbad durchgeführt und im Anschluss daran eine Reinigung mit einem Hochdruckreiniger.

Es liegt im Rahmen der Erfindung, dass nach der Pyrolysebehandlung und ggf. nach der Reinigung im Ultraschallbad und/oder der Reinigung mit einem Hochdruckreiniger die oxidative Behandlung der Spinneinrichtung stattfindet. Nach sehr bevorzugter Ausführungsform der Erfindung wird die oxidative Behandlung der Spinneinrichtung bzw. Spinnplatte bei Temperaturen über 100 °C, vorzugsweise über 150 °C, bevorzugt über 200 °C in Anwesenheit zumindest eines oxidierenden Mediums durchgeführt. Es liegt im Rahmen der Erfindung, dass die oxidative Behandlung bei Temperaturen von 200 bis 600 °C, vorzugsweise von 250 bis 550 °C, bevorzugt von 350 bis 500 °C durchgeführt wird. Zweckmäßigerweise wird Luft und/oder reiner Sauerstoff als oxidierendes Medium eingesetzt. Grundsätzlich ist aber auch die Verwendung anderer oxidierender Medien bzw. anderer Oxidationsmittel möglich. Bei der oxidativen Behandlung erfolgt eine Oxidation des in den Pfropfen enthaltenen amorphen Kohlenstoffs zu Kohlendioxid. Das ermöglicht eine besonders effektive Entfernung der Pfropfen aus den zugeordneten Spinnbohrungen. Nach einer besonders bevorzugten Ausführungsform der Erfindung wird die oxidative Behandlung bei reduziertem Druck durchgeführt. Reduzierter Druck meint dabei einen Druck, der unterhalb des Atmosphärendrucks liegt.

Vorzugsweise erfolgt nach der oxidativen Behandlung eine Reinigung der Spinneinrichtung bzw. Spinnplatte im Ultraschallbad. Zweckmäßigerweise wird fernerhin nach der oxidativen Behandlung eine Reinigung der Spinneinrichtung bzw. Spinnplatte mit einem Hochdruckreiniger durchgeführt. Bevorzugt wird zuerst eine Reinigung im Ultraschallbad und danach eine Reinigung mit dem Hochdruckreiniger verwirklicht. Es liegt im Rahmen der Erfindung, dass die Verfahrensschrittfolge "oxidative Behandlung - Ultraschallbadreinigung - Hochdruckreinigung" zumindest einmal wiederholt wird.

Soweit nach der Pyrolysebehandlung und/oder nach der oxidativen Behandlung eine Reinigung der Spinneinrichtung bzw. Spinnplatte mit einem Hochdruckreiniger stattfindet, hat sich ein Hochdruckreiniger mit Rundlochdüsen besonders bewährt. Fernerhin ist eine bevorzugte Ausführungsform der Erfindung dadurch gekennzeichnet, dass ein Hochdruckreiniger eingesetzt wird, der mit einem gepulsten Flüssigkeitsstrahl bzw. mit gepulsten Flüssigkeitsstrahlen arbeitet.

Der Erfindung liegt die Erkenntnis zugrunde, dass mit dem erfindungsgemäßen Verfahren eine vollständige und funktionssichere Reinigung einer Spinneinrichtung bzw. einer Spinnplatte möglich ist. Hervorzuheben ist, dass diese Reinigung mit relativ geringem Aufwand realisiert werden kann. Die vorher in bestimmte Spinnbohrungen eingeführten Pfropfen lassen sich im Zuge der Reinigung einfach und vollständig entfernen. Aufgrund der effektiven Reinigung mit dem erfindungsgemäßen Verfahren sind zusätzliche, insbesondere mechanische Reinigungsschritte nicht mehr erforderlich. Dadurch werden natürlich auch die mit mechanischen Reinigungsmaßnahmen verbundenen Beschädigungen von Spinnbohrungen vermieden.

## Patentansprüche

1. Verfahren zur Reinigung von Spinneinrichtungen mit einer Mehrzahl von Spinnbohrungen für die Ausgabe von schmelzflüssigem Kunststoff,
wobei im Betrieb der Spinneinrichtung einzelne verschmutzte und/oder verstopfte Spinnbohrungen mit Pfropfen verschlossen werden, welche Pfropfen zumindest teilweise aus zumindest einer oxidierbaren Substanz bestehen,
wobei die Spinneinrichtung im Zuge ihrer Reinigung einer Pyrolysebehandlung zum Abbau von restlichem Kunststoff unterworfen wird
und wobei die Spinneinrichtung einer oxidativen Behandlung unterzogen wird, so dass die oxidierbare Substanz oxidiert wird.

2. Verfahren nach Anspruch 1, wobei die Pfropfen aus Grafit und aus der oxidierbaren Substanz bestehen.

3. Verfahren nach einem der Ansprüche 1 oder 2, wobei die oxidierbare Substanz zumindest teilweise aus amorphem Kohlenstoff besteht.

4. Verfahren nach einem der Ansprüche 1 bis 3, wobei die Pyrolyse bei Unterdruck bzw. im Vakuum und/oder unter Inertbedingungen durchgeführt wird.

5. Verfahren nach einem der Ansprüche 1 bis 4, wobei die oxidative Behandlung bei Temperaturen über 100 °C, vorzugsweise über 150 °C, bevorzugt über 200 °C in Anwesenheit zumindest eines oxidierenden Mediums (Oxidationsmittel) durchgeführt wird.

6. Verfahren nach Anspruch 5, wobei die oxidative Behandlung bei Temperaturen von 200 bis 600 °C, vorzugsweise 250 bis 550 °C, bevorzugt 350 bis 500 °C durchgeführt wird.

7. Verfahren nach einem der Ansprüche 1 bis 6, wobei Luft und/oder reiner Sauerstoff als oxidierendes Medium eingesetzt wird.

8. Verfahren nach einem der Ansprüche 1 bis 7, wobei die oxidative Behandlung bei reduziertem Druck durchgeführt wird.

9. Verfahren nach einem der Ansprüche 1 bis 8, wobei die Spinneinrichtung nach der Pyrolysebehandlung und/oder nach der oxidativen Behandlung in einem Ultraschallbad gereinigt wird.

10. Verfahren nach einem der Ansprüche 1 bis 9, wobei die Spinneinrichtung nach der Pyrolysebehandlung und/oder nach der oxidativen Behandlung mit einem Hochdruckreiniger gereinigt wird.

## Claims

1. A process for cleaning spinning devices comprising a plurality of spinning holes for the output of molten plastics,
wherein individual contaminated and/or clogged spinning holes can be capped with plugs whilst the spinning device is in operation, which plugs at least partly consist of at least one oxidisable substance,
wherein in the course of its cleaning the spinning device is subjected to a pyrolysis treatment for degradation of the residual plastic
and wherein the spinning device undergoes an oxidative treatment, so that the oxidisable substance is oxidised.

2. The process according to claim 1, wherein said plugs consist of graphite and of the oxidisable substance.

3. The process according to any of claims 1 or 2, wherein said oxidisable substance consists at least partly of amorphous carbon.

4. The process according to any of claims 1 to 3, wherein said pyrolysis is accomplished at negative pressure or in vacuum and/ or under inert conditions.

5. The process according to any of claims 1 to 4, wherein said oxidative treatment is accomplished at temperatures above 100°C, preferably above 150°C, in particular above 200°C in the absence of at least one oxidising medium (oxidant).

6. The process according to claim 5, wherein said oxidative treatment is accomplished at temperatures from 200 to 600°C, preferably 250°C to 550°C, in particular 350°C to 500°C.

7. The process according to any of claims 1 to 6, wherein said air and/or pure oxygen is used as oxidising medium.

8. The process according to any of claims 1 to 7, wherein said oxidative treatment is accomplished at reduced pressure.

9. The process according to any of claims 1 to 8, wherein said spinning device is cleaned in an ultrasonic bath after the pyrolysis treatment and/or after the oxidative treatment.

10. The process according to any of claims 1 to 9, wherein said spinning device is cleaned with a high-pressure cleaner after the pyrolysis treatment and/or after the oxidative treatment.

## Revendications

1. Procédé de nettoyage de dispositifs de filage comprenant une pluralité d'orifices de filière pour la distribution de matière plastique fondue, procédé dans lequel des orifices de filière individuels, encrassés et/ou obstrués en cours de service du dispositif de filage, sont fermés par des bouchons, lesquels bouchons se composent au moins en partie d'au moins une substance oxydable, le dispositif de filage, au cours de son nettoyage, est soumis à un traitement de pyrolyse pour la dégradation de matière plastique résiduelle, et le dispositif de filage est soumis à un traitement d'oxydation, de sorte que la substance oxydable est oxydée.

2. Procédé suivant la revendication 1, dans lequel les bouchons se composent de graphite et de la substance oxydable.

3. Procédé suivant l'une des revendications 1 et 2, dans lequel la substance oxydable se compose au moins en partie de carbone amorphe.

4. Procédé suivant l'une des revendications 1 à 3, dans lequel la pyrolyse est mise en oeuvre sous dépression et/ou sous vide et/ou dans des conditions inertes.

5. Procédé suivant l'une des revendications 1 à 4, dans lequel le traitement d'oxydation est mis en oeuvre à des températures de plus de 100°C, de préférence de plus de 150°C, préférentiellement de plus de 200°C, en présence d'au moins un agent oxydant (agent d'oxydation).

6. Procédé suivant la revendication 5, dans lequel le traitement d'oxydation est mis en oeuvre à des températures de 200 à 600°C, de préférence de 250 à 550°C, préférentiellement de 350 à 500°C.

7. Procédé suivant l'une des revendications 1 à 6, dans lequel de l'air et/ou de l'oxygène pur est utilisé en tant qu'agent oxydant.

8. Procédé suivant l'une des revendications 1 à 7, dans lequel le traitement d'oxydation est mis en oeuvre sous pression réduite.

9. Procédé suivant l'une des revendications 1 à 8, dans lequel le dispositif de filage, après le traitement de pyrolyse et/ou après le traitement d'oxydation, est nettoyé dans un bain à ultrasons.

10. Procédé suivant l'une des revendications 1 à 9, dans lequel le dispositif de filage, après le traitement de pyrolyse et/ou après le traitement d'oxydation, est nettoyé par un dispositif de nettoyage à haute pression.
